# EUROPEAN PATENT APPLICATION

(11) **EP 0 985 848 A1**
(43) Date of publication of application: **15.03.2000**
(21) Application number: 98115317.4
(22) Date of filing: 14.08.1998
(51) Int. Cl.: F16F 9/38, F16F 9/58, B29C 70/00, B29C 45/14

(54) **Stroke limitation spring assembly for a motor-vehicle suspension and method for manufacturing the same**

(71) Applicant: BURFORD TRADING LIMITED, Douglas - Isle of Man (GB)
(72) Inventor: Raoult, Marie Gaud, 35800 Dinard (FR)
(74) Representative: Sutto, Luca

(57) **Abstract**

A method is provided for the realisation of an elastic assembly for limiting springing for motor vehicle suspensions, consisting of setting vertically a bellows protection element (1) made of plastic material comprising a lower portion (3) presenting an inner surface corresponding to the outer profile of an elastic buffer (4) to be realised, of pouring a resin into said lower portion circumscribed by rigid moulds (5) and of subjecting the poured resin to a polymerisation process. Also provided is an elastic assembly for limiting springing (11) for motor vehicle suspensions comprising an elastic buffer (4) and a bellows protection element (1) presenting respective surfaces (4a and 3b) of mutual engagement able to be joined monolithically by chemical connection of the materials whereof they are made.

## Description

The present invention relates to a stroke limitation spring assembly for a motor-vehicle suspension.

The invention further relates to a method for manufacturing the same elastic assembly.

As is well known, suspensions for motor vehicles generally comprise an elastic assembly able to limit the stroke and hence the springing of the suspended part when the latter is subjected to thrusts exceeding the normal static load by a pre-determined value.

Such elastic assembly is normally constituted by a buffer made of plastic material of essentially tubular shape, arranged in series with the shock absorber of the suspension; to the buffer is coaxially associated a bellows protection element also made of plastic material able to define a tubular container which develops starting from one end of the elastic buffer itself in such a way as to contain and protect from external agents such as dust, water, grease, the movable stem of the shock absorber.

The prior art provides for the elastic buffer to be produced separately from the bellows protection element

In general, the buffer is obtained by pouring appropriate resins into moulds comprising multiple mutually approachable parts, set to define the shape of the buffer itself.

Subsequently the protective element is mechanically fastened to the elastic buffer utilising an attachment portion of the former which is fitted, exploiting its elasticity, onto a corresponding annular expansion of the latter.

In practice the bellows protection element overlaps only partially the elastic buffer in correspondence with the respective mechanical fastening areas and the elastic buffer has most of its outer surface in view.

The prior art summarily described above presents some drawbacks.

In the first place it should be noted that industrially and particularly in the sector of components destined to the automotive industry it is a fundamental and strongly held requirement that the elastic buffer have a perfect superficial finish; it is therefore necessary to make absolutely invisible the junction lines or burrs due to the undesired run-off or resin through the separation surfaces defined between the parts comprising the mould.

Generally, in order to obviate or reduce the drawback described above it is necessary to employ costly precision moulds thereby minimising moulding burrs which, if present, are anyway to be removed through an appropriate working process.

In any case, sometimes the results attained with such interventions are not deemed acceptable, causing the part to be scrapped.

It should also be noted that the outer shaping of the elastic buffer is conditioned by the shape of the area of fastening to the bellows protection element and hence cannot be optimally designed taking into account solely the dynamic behaviour requirements envisioned for the actual operation of the buffer itself.

In addition to the above, it should be noted that the separate production of the buffer from the bellows necessarily entails an additional operation, typically manual, wherein the two pieces are assembled.

Note that the manual execution of the assembly and the type of coupling give rise to a product of relatively high cost and often less than excellent quality.

In this situation, the technical task constituting the basis for the present invention is to devise an elastic assembly for limiting springing for motor vehicle suspensions and a method whereby the same is realised able essentially to obviate the aforementioned drawbacks.

Within said technical task, an important aim of the invention is to devise an elastic assembly for limiting springing and a method for realising the same which allow to overcome with contained costs the mentioned problem of the superficial finish of the elastic buffer constituting a fundamental component of the elastic assembly.

Another important aim of the invention is to devise an elastic assembly wherein the conformation of the buffer can be designed solely according to requirements pertaining to its dynamic behaviour.

A further aim is to devise an elastic assembly for limiting springing which presents a particularly high degree of reliability and durability.

The technical task and the aims specified above are essentially attained by a stroke limitation spring assembly for a motor-vehicle suspension and by a method for the manufacturing of the same as described in the accompanying claims.

By way of indicative and non limiting example, the description is now provided of a preferred, but not exclusive, embodiment of an elastic assembly for limiting springing and of a method for the realisation of the same according to the invention.

The description refers to the accompanying drawings, provided purely by way of non-limiting indication, wherein:
- Figures 1 through 4 schematically show longitudinal cross sections of successive operating phases of the meted for the realisation of the elastic assembly in accordance with the invention,
- Figure 5 shows an interrupted longitudinal cross section of an embodiment variation of the elastic assembly constituting the object of the invention in a final phase of the process wherein the same is produced.

With reference to the accompanying drawings, the method according to the invention consists first of all of setting vertically a bellows protection element (1) made of plastic material, comprising a first upper portion (2) able to define a tubular container wherein the stem of a shock absorber can be housed to prevent it from coming in contact with dust, water, grease or any other external agent.

The protection element (1) further comprises a second lower tubular portion (3) consecutive to the first portion (2) and presenting a bottom opening (3a).

The second portion (3) presents an inner surface (3b) corresponding to the outer profile of a buffer (4) to be realised in accordance with the present invention.

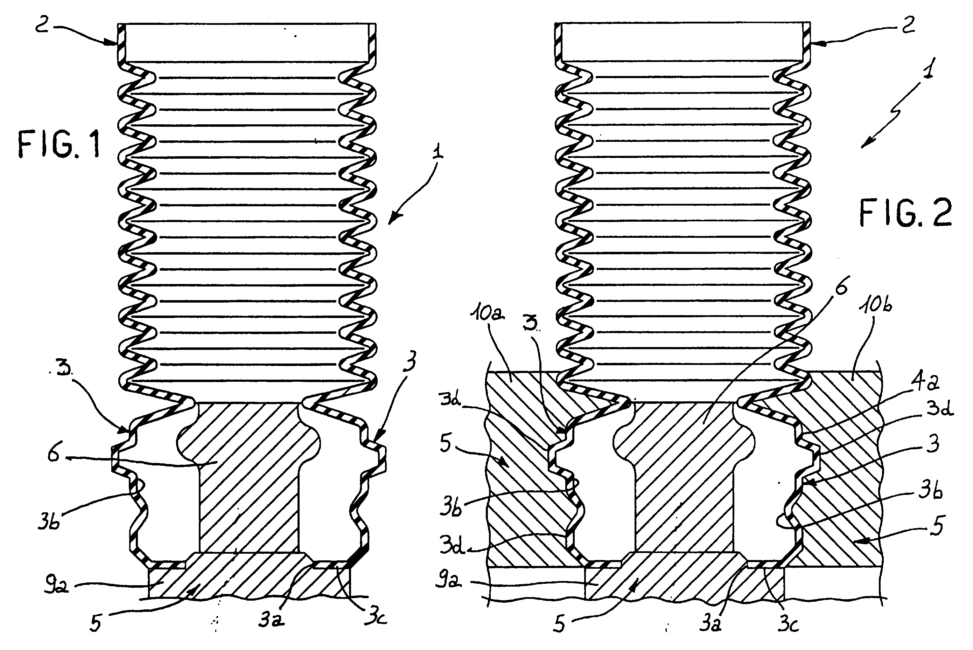

The meted further entails circumscribing the second portion (3) externally by means of rigid moulds (5) (see Figures 1 and 2) in such a way as to close the bottom opening (3a) and so that the second portion (3) itself is subjected to a geometric stabilisation, i.e. is stiffened, thereby defining internally a chamber with rigid walls open at the top.

Since the buffer (4) to be realised within said chamber with rigid walls has a tubular shape, i.e. it presents a longitudinal inner cavity, one has to provide for the insertion into the second portion (3) of a core (6), i.e. a full element modelled in conformity to the profile desired for said inner cavity of the buffer.

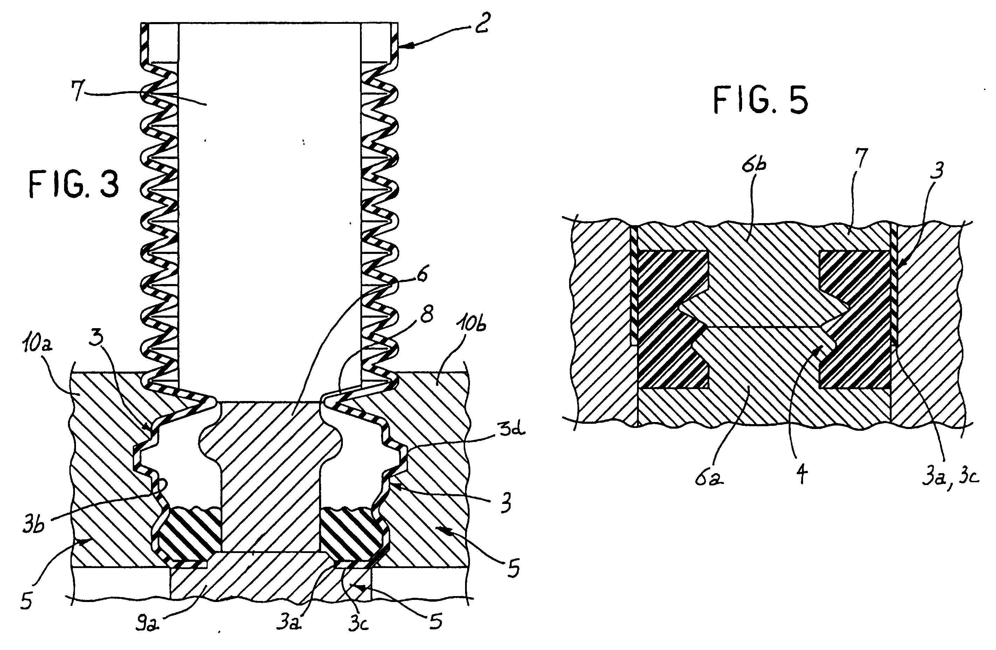

Into the second portion (3) transformed into a chamber with rigid walls, a resin in the liquid state (see Fig. 3) is then poured from above; preferably the resin destined to define the buffer shall be chemically compatible with the plastic material of the protection element (1).

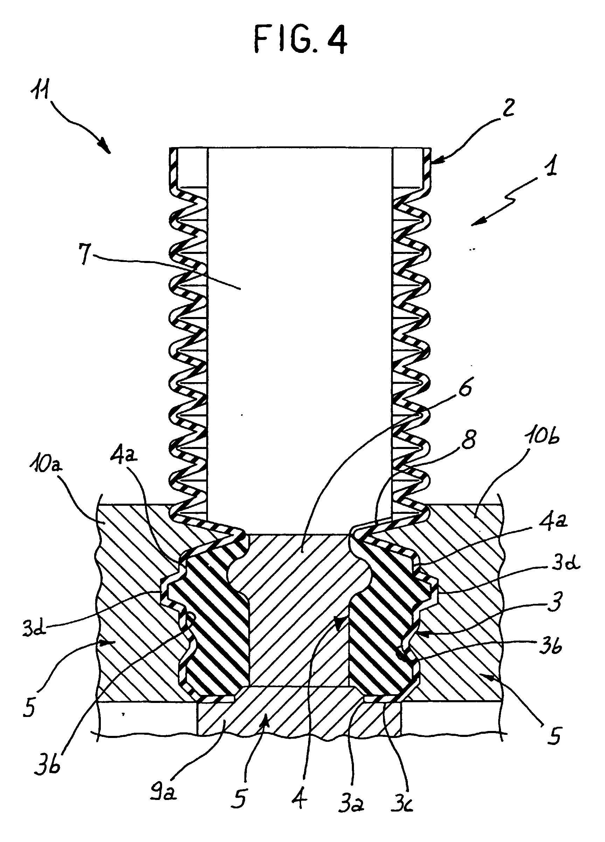

Before subjecting this resin in the liquid state to a polymerisation process, the space allowed for its expansion is delimited also at the top by shutting the opening between the second portion (3) and the first portion (2) of the protection element (1) by introducing from above into the first portion a rigid closure element (7), as shown in Figure 4.

The closure element (7) is shaped in such away as to leave at least one venting passage (8) for the escape of air during the growth in volume by the resin resulting from the polymerisation process.

Any slight resin run-off in the passage (8) is not visible from the exterior and hence does not compromise the quality of the finished product, and in fact it contributes to improve the attachment between buffer (4) and protection element (1).

It should be noted that the closure of the bottom opening (3a) of the second portion (3) can be obtained by setting its edge (3c) encompassing the opening (3a) itself down onto a first base mould (9) presenting a projection (9a) appropriately dimensioned for insertion into said opening (3a) (see Figures 1 through 4).

The geometric stabilisation of the second portion (3) is obtained through the use of two second movable moulds (10a and 10b) shaped counter to the outer surface (3d) of the second portion (3) itself (as shown in Figures 2, 3, 4).

The movable moulds (10a and 10b) are able to co-operate with the base mould (9) in such a way as to realise altogether, in operative position, a rigid form to contain the second portion (3).

It should be noted that the core (6) can be placed inside the second portion (3) in part before pouring and in part after pouring (Figure 5), or in full before pouring (Figures 1 and 4) or, yet again, in full after pouring the resin (case not shown).

More specifically, in the first case (Figure 5) the core (6) is subdivided into a lower portion (6a) defined by an expansion of the base mould (9) developing up wards, and an upper portion (6b) formed by a projecting portion of the rigid closure element (7) developing downwards.

In this case the lower portion (6a) is inserted into the second portion (3) during the closure of the lower opening (3a) when the protection element (1) is placed over the first mould (9).

The upper portion (6b) in turn sets itself against the lower portion (6a) thereby completing the formation of the core after the resin is poured when the closure element (7) is introduced from above through the first portion (2) (see Figure 5 again).

In the second case (Figures 1 and 4) the base mould (9) can present an upper expansion developing upwards corresponding to the complete profile of the core (6) and thus the latter is already inserted in the desired axial position when the protection element (1) is placed over the base mould (9) itself.

In the third case not shown the closure element (7) may present at the bottom a projecting portion corresponding to the complete profile of the core (6) which therefore sets itself against the base mould (9) when, after the resin is poured, said closure element (7) is introduced from above in the first portion (2).

Once the polymerisation of the resin is completed, a buffer (4) is obtained, externally delimited by the second portion (3) and forming a single body therewith.

Obviously, once solidification is complete, the rigid moulds (5) are moved away from the second portion (3) of the bellows protection element.

The core (6) is also easily extracted from the buffer (4) given the elastic quality of the latter.

To describe now in detail the product obtainable with the method outlined above, the number (11) indicates in its entirety an elastic assembly for limiting springing in accordance with the invention.

It comprises an elastic buffer (4) of essentially tubular shape and a protection element (1) provided to be associated coaxially to the buffer in such a way as to define with its first portion (2) a tubular container, destined to house the movable stem of a shock absorber, which develops starting from one end of the elastic buffer itself.

Originally the elastic buffer (4) and the protection element (1) present respective engagement surfaces (4a and 3b) able to be joined monolithically, i.e. in such a way as to form a single body.

More specifically the surfaces of mutual engagement between the buffer and the protection body define a chemical connection of the materials i.e. of the resins whereof both the buffer and the protection element are made.

The engagement surface (3b) of the protection element (I) develops in away suitable for enclosing essentially the entire outer surface (4a) of the buffer (4) which constitutes its corresponding engagement surface.

Moreover, the engagement surfaces (3b and 4a) can present respective curved or appropriately shaped areas, whose conformation can be designed according exclusively to the functional requirements of the buffer (4), since the stable union between the latter and the protection element (1) is determined by the fact that they form a single body obtained advantageously by moulding the buffer internally to the engagement surface (3b) of the protection element (1). Preferably the materials with which buffer and protection elements are obtained are chosen among resins with essentially similar chemical composition in order to maximise the chemical connection and hence the attachment between buffer and protection element.

Obviously, if instead the chemical compatibility between the resins whereof the buffer and the protection element are made is not perfect and hence the chemical structural connection is not very strong the curved areas of their engagement surfaces can contribute, realising a mechanical connection, to enhance the stability and overall reliability of the union between these components.

Preferably the materials whereof the buffer (4) and the protection element (1) are made can be resins of identical chemical composition and presenting a different degree of expansion; more specifically the degree of expansion of the resin defining the buffer is generally greater than that of the resin defining the protection element.

In this case it is clear that the material defining the buffer shall present an elastic modulus lower than that of the material defining the protection element, which is axially deformable essentially thanks to its characteristic bellows structure.

Lastly, before the phase wherein the buffer is moulded internally to the protection element (1) a phase can be provided wherein a paint coating is applied to the surface (3b) with a material suitable to favour adhesion between the resin defining the protection element (1) and the resin defining the buffer.

The invention attains important advantages.

First of all, the method according to the invention allows to obtain an elastic buffer whose outer surface is completely invisible being enclosed in a portion of the bellows protection element whereto it is associated.

Therefore there are no problems pertaining to the surface finish of the buffer and no interventions are necessary to make the latter meet the demands of the market.

Moreover the realisation of the buffer directly inside the bellows protection element that serves to form the shape of the buffer itself eliminates the phase wherein these components are assembled mechanically and allows to obtain in practice a single body wherein the union between the two functional parts that compose it is secure and reliable for the entire working life of the suspension whereto it is to be associated.

It should also be noted that, advantageously, thanks to the chemical engagement between buffer and protection element, the latter co-operates mechanically with the buffer, giving rise to an elastic assembly that is extremely efficient from the point of view of dynamic behaviour.

Note also that the dynamic collaboration between buffer and protection element entails a reduction in overall production costs, also because it is generally possible to reduce the material used for the realisation of the buffer with respect to traditional technologies, with no loss in terms of performance.

Lastly it should be stressed that the shape of the elastic buffer can be determined while optimally respecting the conformations deemed most advantageous from a point of view of its dynamic operation because the shape of its surface of engagement to the bellows protection element is no longer binding as in the prior art.

## Claims

1. Method for manufacturing a stroke limitation spring assembly for a motor-vehicle suspension. comprising an elastic buffer (4) of essentially tubular shape characterised in that it comprises the following steps:
a) readying a protection element (1), preferably bellows shaped, made of plastic material comprising a first upper portion (2) destined to define a tubular container and a second lower portion (3) also tubular, consecutive to the first portion, presenting a bottom opening (3a) and an inner surface corresponding essentially to an outer profile to be conferred to said buffer;
b) circumscribing said second portion (3) of the protection element (1) with rigid moulds (5) to stabilise geometrically the second portion and define a chamber with rigid walls;
c) positioning in said second portion a core (6) corresponding to an internal longitudinal cavity of said buffer;
d) inserting in said chamber a resin in the liquid state;
e) subjecting said resin in the liquid state to a solidification process.

2. Method according to claim 1, characterised in that the phases a), b), c), d) and e) follow each other sequentially in time.

3. Method according to claim 1 or claim 2, characterised in that during said phase a) the protection element (1) is positioned vertically and in that during the circumscription phase b) said moulds (5) are driven to approach the protection element to close the bottom opening (3a) thereof, defining a chamber open at the top.

4. Method according to claim 3, characterised in that said resin in the liquid state is inserted into the chamber open at the top by pouring from above.

5. Method according to claim 4, characterised in that, subsequent to the pouring, said chamber with rigid walls is closed at the top by means of the axial introduction from above of a rigid closure element (7) through the first portion (2) of the protection element (1).

6. Method according to claim 5, characterised in that during the closure phase of said chamber at least one vent passage (8) for said resin is defined.

7. Method according to any one of the previous claims, characterised in that said solidification process is a polymerisation of said resin.

8. Method according to claim 5, characterised in that said closure of the bottom opening of the protection element is obtained by means of a first base mould (9a) able to define a support for an edge (3c) encompassing said bottom opening (3a) and in that said geometric stabilisation of the second portion (3) of the protection element is obtained by means of at least two second movable moulds (10a and 10b) shaped counter to the outer surface (3d) of the second portion (3) and able to co-operate with said first mould (9a) in such a way as to realise altogether a rigid form for containing the second portion (3) itself.

9. Method according to claim 8, characterised in that said insertion of the core (6) into said second portion (3) of the protection element (1) is partially effected during said closure of the bottom opening (3a) due to the presence of an expansion (6a) of said first base mould (9a) developing upwards and corresponding at least to a lower portion of the core itself, and in that the insertion of the core (6b) is completed after said pouring by means of an introduction from above through said first portion (2) of the protection element of said rigid closure element (7) presenting at the bottom a projecting portion (6b) able to set itself against said expansion of the first mould and corresponding to the upper portion of the core.

10. Method according to claim 8, characterised in that said insertion of the core (6) into said second portion (3) of the protection element (1) is effected during said closure of the bottom opening due to the presence of an expansion of said first base mould developing upwards and corresponding to the complete profile of the core itself.

11. Method according to claim 8, characterised in that said insertion of the core into said second portion of the protection element is effected after each moulding by the introduction from above through said first portion (3) of said rigid closure element (7) presenting at the bottom a projecting portion able to set itself against said first mould and corresponding to the complete profile of the core itself

12. Method according to claim 1, characterised in that before said resin insertion phase a phase is provided wherein the chamber is closed, said insertion phase being obtained by injection of a resin in the liquid or fluid state.

13. Stroke limitation spring assembly for a motor-vehicle suspension comprising an elastic buffer (4) of essentially tubular shape and a protection element (1) preferably with bellows conformation destined to be associated coaxially to the elastic buffer in such a way as to define a tubular container which develops starting from one end of the elastic buffer itself, characterised in that said elastic buffer and said protection element present respective engagement surfaces (4a and 3b) able to be joined monolithically by chemical connection of the materials whereof the buffer and the protection element are made.

14. Assembly according to claim 13, characterised in that said engagement surface (3b) of the protection element (1) develops axially to enclose essentially the entire outer surface of the elastic buffer.

15. Assembly according to claim 17, characterised in that said engagement surfaces (3b and 4a) of the protection element and of the buffer present respective curved areas shaped counter to each other.

16. Assembly according to claim 13, characterised in that said elastic buffer (4) and said protection element (1) are made of materials chosen among resins of essentially similar chemical composition.

17. Assembly according to claim 13, characterised in that said buffer presents a smaller elastic modulus than that of the protection element.

18. Assembly according to claim 13, characterised in that the chemical connection between said buffer (4) and said protection element (1) is obtained by moulding the buffer internally to a lower portion (3) of the protection element (1).
